# EUROPEAN PATENT APPLICATION

(11) **EP 2 757 405 A1**
(43) Date of publication of application: **23.07.2014**
(21) Application number: 13197274.7
(22) Date of filing: 13.12.2013
(51) Int. Cl.: G02B 26/08

(54) **An electronic device having a projector function and a vibrating mirror element**

(30) Priority: 17.01.2013 JP 2013005894
(71) Applicant: Funai Electric Co., Ltd., Daito city Osaka 574-0013 (JP)
(72) Inventor: Murayama, Manabu, Osaka, Osaka 574-0013 (JP)
(74) Representative: Osha Liang SARL

(57) **Abstract**

A vibrating mirror element (1; 201; 301) includes a mirror part (11; 311) that reflects light and is tiltable around a rotation axis (A), a first deformable coupling beam (12; 212) and a second deformable coupling beam (13; 213) connected respectively to a first mirror end portion (11a; 311c, 311d) and a second mirror end portion (11b; 311e, 311f) of the mirror part (11; 311) positioned on an intersection line (B; C, D) that intersects the rotation axis (A), and a first drive part (14) and a second drive part (15) that each include a piezoelectric element (3b) configured to deform by voltage application, the first drive part (14) and a second drive part (15) being connected respectively to the first deformable coupling beam (12; 212) and the second deformable coupling beam (13; 213).

## Description

### [Technical Field]

The present invention relates generally to an electronic device having a vibrating mirror element and a projector function, e.g., an electronic device having a vibrating mirror element equipped with a mirror part for reflecting light and a projector function equipped with the vibrating mirror element.

### [Background Art]

Conventional vibrating mirror elements are equipped with a mirror part for reflecting light (for example, see Patent Document 1).

The above Patent Document 1 discloses a light scanning device equipped with a movable plate (mirror part) having a reflective surface that reflects light, a pair of torsion beams that pivotally support the movable plate to enable rotation as a rotation axis of the movable plate, and a drive part for applying a driving force (torque) in a torsional direction to the pair of torsion beams. A rib for suppressing distortion of the movable plate due to the driving force in a torsional direction applied to the movable plate by the pair of torsion beams is formed on the movable plate of the light scanning device. The movable plate and the pair of torsion beams are connected directly on the rotation axis of the movable plate.

### [Patent Document]

[Patent Document 1] Japanese Unexamined Patent Application Publication No. 2010-128116

However, in the light scanning device of the above Patent Document 1, the driving force in a torsional direction (torque) of the pair of torsion beams is applied directly to the movable plate because the movable plate and the pair of torsion beams are connected directly on the rotation axis of the movable plate. As such, distortion of the movable plate (mirror part) cannot be effectively suppressed due to application of a comparatively large torque on the movable plate, even if a rib is provided on the movable plate.

### [Summary of the Invention]

One or more embodiments of the present invention provide a vibrating mirror element that can sufficiently suppress distortion of the mirror part and to provide an electronic device equipped with the vibrating mirror element.

A vibrating mirror element according to one or more embodiments of the present invention may include a mirror part that reflects light and is tiltable around a rotation axis; a first deformable coupling beam and a second deformable coupling beam connected respectively to a first mirror end portion and a second mirror end portion of the mirror part, the first and second mirror end portions being positioned on an intersection line that intersects the rotation axis; and a first drive part and a second drive part that each include a piezoelectric element configured to deform by voltage application, the first drive part and the second drive part being connected respectively to the first deformable coupling beam and the second deformable coupling beam; wherein the mirror part is configured to be tilted around the rotation axis by: displacement of the first mirror end portion connected to the first deformable coupling beam caused by deformation of the piezoelectric element of the first drive part, and displacement of the second mirror end portion connected to the second deformable coupling beam caused by deformation of the piezoelectric element of the second drive part.
According to one or more embodiments, the mirror part may comprise a mirror. According to one or more embodiments, the first deformable coupling bean and the second deformable coupling beam may be connected respectively to a first mirror end and to a second mirror end of the mirror. According to one or more embodiments, the first drive part may comprise a first drive circuit and the second drive part may comprise a second drive circuit, each including a piezoelectric crystal configured to deform by voltage application.

According to one or more embodiments of the present invention, the vibrating mirror element as described above may comprise a mirror part which may be configured to tilt around the rotation axis by connecting the first deformable coupling beam and the second deformable coupling beam, respectively, to the first mirror end portion and the second mirror end portion of the mirror part positioned on an intersection line that intersects the rotation axis by displacement of the first mirror end portion connected to the first deformable coupling beam caused by deformation of the piezoelectric element (e.g., crystal) of the first drive part, and by displacement of the second mirror end portion connected to the second deformable coupling beam caused by deformation of the piezoelectric element of the second drive part. By this, the mirror part can be tilted around the rotation axis without generating a driving force (torque) around the rotation axis in the first deformable coupling beam and in the second deformable coupling beam, unlike when the first mirror end portion and the second mirror end portion and the first deformable coupling beam and the second deformable coupling beam are respectively connected on the rotation axis. By this, distortion of the mirror part can be effectively suppressed because the torque applied to the end portions can be suppressed.

According to one or more embodiments, the first deformable coupling beam, at both end portions thereof in a longitudinal direction, may be connected near both end portions of the first drive part in a longitudinal direction; the first deformable coupling beam, near a center area thereof in a longitudinal direction, may be connected to the first mirror end portion of the mirror part; the second deformable coupling beam may not be connected to the first deformable coupling beam; the second deformable coupling beam, at both end portions thereof in a longitudinal direction, may be connected near both end portions of the second drive part in a longitudinal direction; and the second deformable coupling beam, near a center area thereof in a longitudinal direction, may be connected to the second mirror end portion of the mirror part. Configured in this manner, for example, the first deformable coupling beam and the second deformable coupling beam can be deformed in a convex shape or a concave shape toward the center area from both end portions in the longitudinal direction by connecting, respectively, both end portions of the first deformable coupling beam near both end portions of the first drive part, and by connecting, respectively, both end portions of the second deformable coupling beam near both end portions of the second drive part. As a result, the mirror part can be tilted greatly around the rotation axis. Furthermore, displacement in the first mirror end portion and displacement in the second mirror end portion can be easily controlled because deformation of one of either the first deformable coupling beam or the second deformable coupling beam can be suppressed from affecting deformation of the other due to the first deformable coupling beam and the second deformable coupling beam not being connected. By this, the mirror part can be easily tilted to a predetermined angle.

According to one or more embodiments, the first drive part and the second drive part may be configured so that the respective end portions thereof in the longitudinal direction are free ends and a substantially center area thereof in the longitudinal direction is a fixed end, and the first drive part and the second drive part may be configured to deform from the respective fixed end. By configuring in this manner, for example, deformation of the first drive part and the second drive part respectively can be transmitted effectively to the first deformable coupling beam and the second deformable coupling beam because both end portions in the longitudinal direction, which are the free ends with the greatest displacements in the first drive part and the second drive part, and both end portions of the first deformable coupling beam and the second deformable coupling beam, can be connected respectively.

According to one or more embodiments, the first deformable coupling beam may be configured to deform so that a displacement direction at both end portions thereof in the longitudinal direction and a displacement direction at the substantially center area thereof in the longitudinal direction are opposite directions, and the second deformable coupling beam may be configured to deform independently of the first deformable coupling beam so that a displacement direction at both end portions thereof in the longitudinal direction and a displacement direction at the substantially center area thereof in the longitudinal direction are opposite directions. Configured in this manner, for example, displacement of the first mirror end portion and the second mirror end portion connected respectively near the center area of the first deformable coupling beam and the second deformable coupling beam can be increased because displacement of the center area in the longitudinal direction of the first deformable coupling beam and the second deformable coupling beam that deform in a convex shape or a concave shape can be increased. By this, the mirror part can be tilted more greatly around the rotation axis. Furthermore, displacement in the first mirror end portion and displacement in the second mirror end portion can be more easily controlled because deformation of one of either the first deformable coupling beam or the second deformable coupling beam can be suppressed from affecting deformation of the other due to the second deformable coupling beam deforming independently of the first deformable coupling beam. By this, the mirror part can be easily tilted to a predetermined angle.

According to one or more embodiments, a direction of deformation of the first drive part and a direction of deformation of the first deformable coupling beam may be the same direction, and a direction of deformation of the second drive part and a direction of deformation of the second deformable coupling beam may be the same direction. Configured in this manner, for example, the first drive part and the first deformable coupling beam can be suppressed from attracting each other, and the second drive part and the second deformable coupling beam can be suppressed from attracting each other, unlike when the directions of deformation oppose each other. By this, the mirror part can be tilted greatly around the rotation axis.

According to one or more embodiments, the first deformable coupling beam and the second deformable coupling beam may be connected respectively to the first mirror end portion and the second mirror end portion positioned near an orthogonal center line orthogonal to the rotation axis of the mirror part. Configured in this manner, for example, the mirror part can be tilted reliably along the orthogonal center line because the first mirror end portion and the second mirror end portion positioned near the orthogonal center line that is orthogonal to the rotation axis of the mirror part can be displaced. By this, the mirror part can be tilted reliably around the rotation axis.

According to one or more embodiments, the first deformable coupling beam and the second deformable coupling beam may be formed to sandwich the mirror part from a direction in which the orthogonal center line extends. Configured in this manner, for example, the mirror part can be easily tilted around the rotation axis because the first mirror end portion and the second mirror end portion can be displaced from both sides in the direction in which the orthogonal center line of the mirror part extends.

According to one or more embodiments, the first drive part and the second drive part may curve or bend so that the mirror part sinks in a plan view. Configured in this manner, for example, the vibrating mirror element can be suppressed from increasing in size because the first drive part and the second drive part can be formed near the mirror part side. Furthermore, the area of the first drive part and the second drive part can be further enlarged because the lengths of the first drive part and the second drive part can be further increased, compared to when the first drive part and the second drive part are formed in a straight line, by curving or bending the first drive part and the second drive part. By this, the driving force generated in the first drive part and the second drive part can be easily increased.

According to one or more embodiments, the vibrating mirror element may further comprise a reinforcing part formed to connect the first deformable coupling beam near the first mirror end portion and the second deformable coupling beam near the second mirror end portion. Configured in this manner, for example, the first mirror end portion and the second mirror end portion can be suppressed from being displaced in an unintended direction because excessive deformation of the first deformable coupling beam near the first mirror end portion and the second deformable coupling beam near the second mirror end portion can be suppressed by the reinforcing part. By this, the mirror part can be tilted reliably around the rotation axis.

An electronic device having a projector function according to one or more embodiments may comprise: a laser beam generator; a control part configured to recognize pixel information by analyzing input video signals; and a vibrating mirror element configured to scan the laser beam generated by the laser beam generator. According to one or more embodiments, the vibrating mirror element may be as described in any of the above-mentioned embodiments. For example, the vibrating mirror element may comprise: a mirror part that reflects light and is tiltable around a rotation axis; a first deformable coupling beam and a second deformable coupling beam connected respectively to a first mirror end portion and a second mirror end portion of the mirror part positioned on an intersection line that intersects the rotation axis; and a first drive part and a second drive part that each include a piezoelectric element configured to deform by voltage application, the first drive part and the second drive part being connected respectively to the first deformable coupling beam and the second deformable coupling beam; wherein the mirror part is tilted around the rotation axis by: displacement of the first mirror end portion connected to the first deformable coupling beam caused by deformation of the piezoelectric element of the first drive part, and displacement of the second mirror end portion connected to the second deformable coupling beam caused by deformation of the piezoelectric element of the second drive part.

According to one or more embodiments of the present invention, the electronic device having a projector function as described above may comprise a first deformable coupling beam and a second deformable coupling beam of the vibrating mirror element which may be respectively connected to the first mirror end portion and the second mirror end portion of the mirror part positioned on the intersection line that intersects the rotation axis. Furthermore, the vibration mirror element may be configured so that the mirror part is tilted around the rotation axis by displacement of the first mirror end portion connected to the first deformable coupling beam caused by deformation of the piezoelectric element of the first drive part, and by displacement of the second mirror end portion connected to the second deformable coupling beam caused by deformation of the piezoelectric element of the second drive part. By this, for example, the mirror part can be tilted around the rotation axis without generating a driving force (torque) around the rotation axis in the first deformable coupling beam and in the second deformable coupling beam, unlike when the first mirror end portion and the second mirror end portion and the first deformable coupling beam and the second deformable coupling beam are respectively connected on the rotation axis. By this, for example, distortion of the mirror part can be effectively suppressed because the torque applied to the end portions can be suppressed. As a result, change in the width (convergence or expansion of the laser beam) of the laser beam reflected by the mirror part can be effectively suppressed. Therefore, a clear projection image can be projected by the electronic device because the laser beam in which change in width is suppressed by the vibrating mirror element can be scanned.

According to one or more embodiments of the present invention, as above, distortion of a mirror part can be effectively controlled.

### [Brief Description of the Drawings]

FIG. 1 is a block diagram illustrating a configuration of a portable electronic device according to a first embodiment of the present invention.
FIG. 2 is a plan view of a laser scanner portion according to the first embodiment of the present invention.
FIG. 3 is a cross-sectional view along line 400-400 of FIG. 2.
FIG. 4 is an enlarged cross-sectional view of a structure of a drive part of the laser scanner portion according to the first embodiment of the present invention.
FIG. 5 is a perspective view of a mirror part of the laser scanner portion tilted around a rotation axis according to the first embodiment of the present invention.
FIG. 6 is a side view, viewed from the Y1 side of FIG. 5, of a first drive part and a first deformable coupling beam deformed to flex in the same direction according to the first embodiment of the present invention.
FIG. 7 is a side view, viewed from the Y2 side of FIG. 5, of a second drive part and a second deformable coupling beam deformed to flex in the same direction according to the first embodiment of the present invention.
FIG. 8 is a plan view of a laser scanner portion according to a second embodiment of the present invention.
FIG. 9 is a side view of a first drive part and a first deformable coupling beam deformed to flex in opposite directions according to a first modification of the first embodiment of the present invention.
FIG. 10 is a side view of a second drive part and a second deformable coupling beam deformed to flex in opposite directions according to the first modification of the first embodiment of the present invention.
FIG. 11 is a plan view of a laser scanner portion according to a second modification of the first embodiment of the present invention.

### [Detailed Description of the Embodiments of the Invention]

### (First Embodiment)

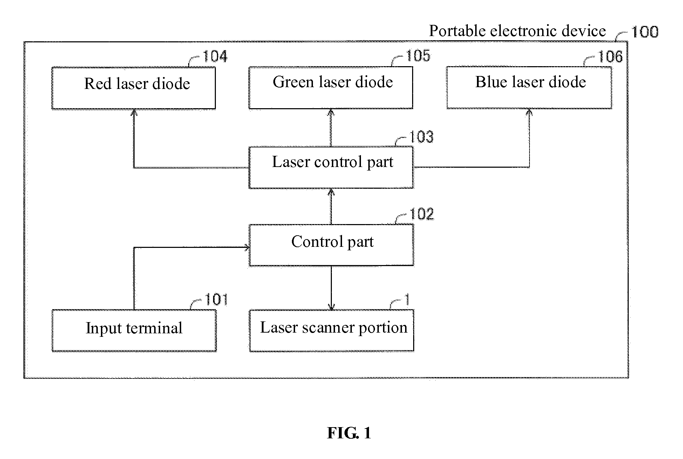

First, a configuration of a portable electronic device 100 according to a first embodiment of the present invention will be described with reference to FIGS. 1 to 5. The portable electronic device 100 is one example of one "electronic device having a projector function" according to one or more embodiments of the present invention.

As illustrated in FIG. 1, the portable electronic device 100 according to the first embodiment of the present invention is provided with an input terminal 101 wherein a video signal may be input from the outside, a control part 102 that recognizes pixel information by analyzing video signals input from the input terminal 101, a laser control part 103 for outputting pixel information as a video, a red laser diode 104, a green laser diode 105, a blue laser diode 106, and a laser scanner portion 1. That is, the portable electronic device 100 may have a projector function able to output video from input video information. The red laser diode 104, the green laser diode 105, and the blue laser diode 106 are one example of a "laser beam generator" according to one or more embodiments of the present invention and the laser scanner portion 1 is one example of a "vibrating mirror element" according to one or more embodiments of the present invention.

Additionally, the laser control part 103 may be configured so as to control the emission of the red laser diode 104, the green laser diode 105, and the blue laser diode 106 based on the pixel information recognized by the control part 102. Furthermore, the red laser diode 104 may be configured to be able to emit red laser beams, the green laser diode 105 may be configured to be able to emit green laser beams, and the blue laser diode 106 may be configured to be able to emit blue laser beams. Moreover, the laser scanner portion 1 may be configured so as to project video onto a predetermined projection position by reflecting the laser beams from the red laser diode 104, the green laser diode 105, and the blue laser diode 106.

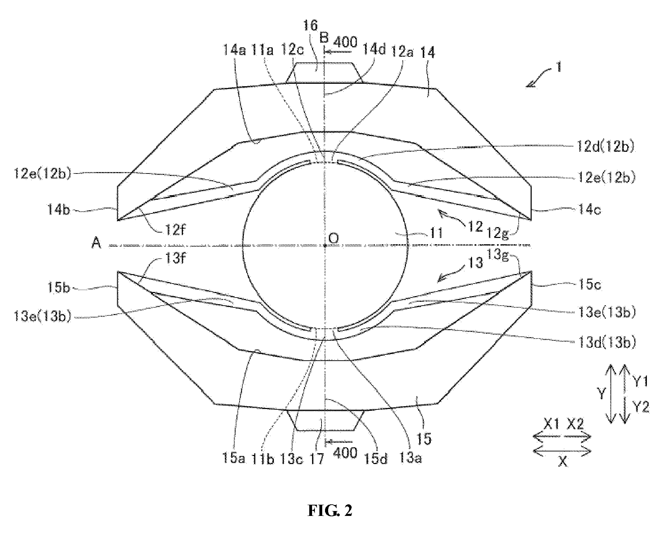

As illustrated in FIG. 2, the laser scanner portion 1 may include a mirror part 11, coupling beams 12 and 13 connected to end portions 11a and 11b respectively of the mirror part 11, drive parts 14 and 15 connected to the coupling beams 12 and 13 respectively, and fixed parts 16 and 17. The coupling beams 12 and 13 are respectively one example of a "first deformable coupling beam" and a "second deformable coupling beam" according to one or more embodiments of the present invention, and the drive parts 14 and 15 are respectively one example of a "first drive part" and a "second drive part" according to one or more embodiments of the present invention.

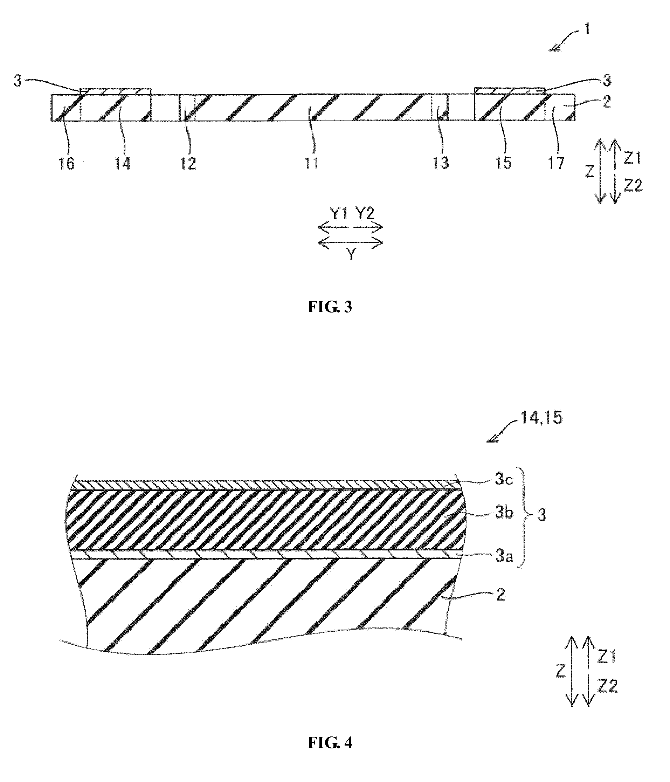

Furthermore, the laser scanner portion 1 may be formed so as to have substantial mirror image symmetry relative to each a rotation axis A of the mirror part 11 and an orthogonal center line B that is orthogonal to the rotation axis A. The orthogonal center line B may extend so as to pass through a center O of the mirror part 11. Moreover, as illustrated in FIG. 3, the mirror part 11, the coupling beams 12 and 13 (see FIG. 2), the drive parts 14 and 15, and the fixed parts 16 and 17 may be integrally formed by a substrate 2 made of any one of Si, SUS, Ti or a compound material thereof. Here, in FIG. 3, the length of the thickness direction (Z direction) of the laser scanner portion 1 is illustrated in an exaggerated state. The orthogonal center line B is one example of an "intersection line" according to one or more embodiments of the present invention.

As illustrated in FIG. 2, the mirror part 11 may be formed in a circle in a plan view so that the center O is positioned substantially in the center area of the laser scanner portion 1 and formed to enable tilting around the rotation axis A. Moreover, the end portion 11a of the mirror part 11 positioned on the orthogonal center line B and the coupling beam 12 may be connected on one side (Y1 side) of an orthogonal line direction (Y direction) that is orthogonal to a rotating axis direction (X direction) of the mirror part 11. Furthermore, the end portion 11b of the mirror part 11 positioned on the orthogonal center line B and the coupling beam 13 may be connected on another side (Y2 side) of the Y direction. Additionally, the mirror part 11 may have a function to reflect laser beams from the red laser diode 104, the green laser diode 105, and the blue laser diode 106 (see FIG. 1). The end portion 11a is one example of a "first mirror end portion" according to one or more embodiments of the present invention and the end portion 11b is one example of a "second mirror end portion" according to one or more embodiments of the present invention.

The coupling beams 12 and 13 may be configured so as to sandwich the mirror part 11 from the Y direction by being disposed respectively on the Y1 side and the Y2 side of the mirror part 11. Moreover, the coupling beams 12 and 13 may be formed to enable deformation by flexing (bending) either in a convex shape that protrudes upward (Z1 side) (hereafter referred to merely as convex shape) or in a concave shape recessed downward (Z2 side) (hereafter referred to merely as concave shape), which is a flexing direction in the opposite direction of the convex shape. Furthermore, the coupling beams 12 and 13 need not necessarily be connected to each other and are configured so as to independently deform by flexing.

The coupling beam 12 on the Y1 side may have a connector part 12a that connects to the end portion 11a of the Y1 side of the mirror part 11, and a beam part 12b that connects to the connector part 12a. Additionally, the coupling beam 13 on the Y2 side may have a connector part 13a that connects to the end portion 11b of the Y2 side of the mirror part 11, and a beam part 13b that connects to the connector part 13a. Both connector parts 12a and 13a may be formed on the orthogonal center line B that is orthogonal to the rotation axis A and may be respectively connected to the end portions 11a and 11b of the mirror part 11 on the orthogonal center line B. The beam parts 12b and 13b may be formed to extend in a rotation axis direction (X direction, longitudinal direction) on the Y1 and Y2 sides of the mirror part 11, respectively.

The beam part 12b may have a curved beam section 12d formed in a center area 12c, and the vicinity thereof, of the X direction and a pair of straight beam sections 12e connected to each end portion of the X direction of the curved beam section 12d. Additionally, the beam part 13b may have a curved beam section 13d formed in a center part 13c, and the vicinity thereof, of the X direction and a pair of straight beam sections 13e connected to each end portion of the X direction of the curved beam section 13d.

The curved beam sections 12d and 13c may each curve along the outer edge section of the mirror part 11. Moreover, the pair of straight beam sections 12e may extend in straight lines respectively from the curved beam section 12d side toward an end portion 12f side of the X1 side and toward an end portion 12g side of the X2 side. Additionally, the straight beam sections 13e may extend in straight lines respectively from the curved beam section 13d side toward an end portion 13f side of the X1 side and toward an end portion 13g side of the X2 side.

Also, the beam part 12b may be connected to the drive part 14 on the Y1 side in the end portions 12f and 12g in the X direction, and may also be connected to the connector part 12a in the center area 12c in the X direction. Additionally, the beam part 13b may be connected to the drive part 15 on the Y2 side in the end portions 13f and 13g in the X direction, and may also be connected to the connector part 13a in the center area 13c in the X direction. As a result, the connector beams 12 and 13 may each be configured to enable deformation by flexing (bending) in a convex shape or concave shape from both of the end portions (end portions 12f, 12g, 13f, and 13g) of the X direction toward the center areas 12c and 13c by flexibly deforming from the drive parts 14 and 15.

The drive parts 14 and 15 may be formed so as to extend in a rotating axis direction (X direction, longitudinal direction). Moreover, the drive parts 14 and 15 may be configured to sandwich the mirror part 11 from the Y direction by being disposed respectively on the Y1 and Y2 sides of the mirror part 11. Additionally, the drive part 14 on the Y1 side may be formed more toward the Y1 side (outer side) than the coupling beam 12, and the drive part 15 on the Y2 side may be formed more toward the Y2 side (outer side) than the coupling beam 13.

Furthermore, the drive parts 14 and 15 may be formed respectively to bend so that the mirror part 11 side (Y2 side and Y1 side) sinks in a plan view. That is, concave sections 14a and 15a may be formed respectively on the mirror part 11 side of the drive parts 14 and 15. In a plan view, the coupling beam 12 and a portion of the Y1 side of the mirror part 11 may be housed in this concave section 14a. Additionally, in a plan view, the coupling beam 13 and a portion of the Y2 side of the mirror part 11 may be housed in the concave section 15a.

Furthermore, the drive part 14 may be connected to the end portion 12f on the X1 side of the coupling beam 12 near the end portion 14b on the X1 side, and may be connected to the end portion 12g on the X2 side of the coupling beam 12 near the end portion 14c on the X2 side. Moreover, the drive part 15 may be connected to the end portion 13f on the X1 side of the coupling beam 13 near the end portion 15b on the X1 side, and may be connected to the end portion 13g on the X2 side of the coupling beam 13 near the end portion 15c on the X2 side. Additionally, the drive parts 14 and 15 may be connected respectively to the coupling beams 12 and 13 on lateral surfaces of the mirror part 11 side (Y2 side and Y1 side).

Furthermore, as illustrated in FIG. 4, the drive parts 14 and 15 may have a drive mechanism portion 3 formed on an upper surface (surface of the Z1 side) of the base material 2. This drive mechanism 3 may have a structure wherein, in order from the bottom (Z2 side), a lower electrode 3 a, a piezoelectric element 3b made from materials able to exhibit a piezoelectric effect such as lead zirconate titanate (PZT) and the like, and an upper electrode 3c are laminated. Additionally, the drive mechanism portion 3 may be configured so as to flexibly deform the piezoelectric element 3b in a convex shape or a concave shape by applying a voltage to the piezoelectric element 3b by generating a potential difference between the lower electrode 3a and the upper electrode 3c. As a result, as illustrated in FIG. 2, the drive parts 14 and 15 may be configured respectively to enable deformation by flexing (bending) in a convex shape or concave shape toward a fixed end from a free end, by defining a fixed end as center areas 14d and 15d in the X direction, and a free end as both end portions of the X direction (end portions 14b, 14c, 15b, and 15c).

Furthermore, the configuration may be such that sine wave voltages of opposite phases are applied to the drive parts 14 and 15. In other words, the drive parts 14 and 15 may be configured so that if one of the drive parts 14 or 15 deforms by flexing in a convex shape, the other deforms by flexing in a concave shape. Moreover, the drive parts 14 and 15 may be configured so as to repeatedly alternate deformation by flexing in a convex shape and deformation by flexing in a concave shape at a drive frequency of about 30 kHz, and the size of the mirror part 11 of the laser scanning portion 1 and the oscillating motion may be designed to match the drive frequency. By this, the drive parts 14 and 15 can oscillate the mirror part 11 around the rotation axis A (see FIG. 2) at a greater deflection angle than a deflection angle at a normal tilt (continuously tilting) by resonating the mirror part 11. More details on the oscillating motion of the mirror part 11 will be described below.

The fixed parts 16 and 17 may be provided respectively to fix the drive parts 14 and 15 onto a fixing frame that is not illustrated. Moreover, as illustrated in FIG. 2, the fixed part 16 may be connected to the center area 14d in the X direction of the drive part 14 as well as to a lateral surface on an opposite side (Y1 side) of the mirror part 11, and the fixed part 17 may be connected to the center area 15d in the X direction of the drive part 15 as well as to a lateral surface on an opposite side (Y2 side) of the mirror part 11. Additionally, the center area 14d of the drive part 14 and the center area 15d of the drive part 15 may be configured by the fixed parts 16 and 17 so as to be fixed ends.

Next, the oscillating motion of the mirror part 11 in the laser scanner portion 1 according to the first embodiment of the present invention, as well as a scanning motion of a laser beam by the laser scanner portion 1, will be described with reference to FIG. 1 and FIGS. 4 to 7.

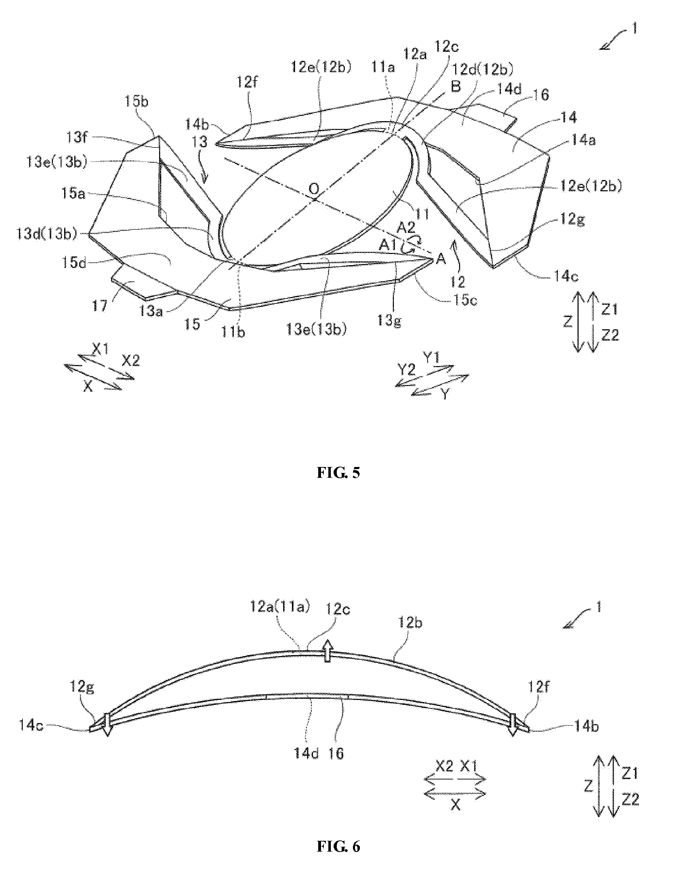

As illustrated in FIG. 5, the end portions 14b and 14c may both be moved downward (Z2 side) in the drive part 14 on the Y1 side and the end portions 15b and 15c may both be moved upward (Z1 side) in the drive part 15 on the Y2 side when the piezoelectric element 3b (see FIG. 4) of the drive part 14 on the Y1 side is deformed by flexing in a convex shape and the piezoelectric element 3b of the drive part 15 on the Y2 side is deformed by flexing in a concave shape.

By this, the end portions 12f and 12g of the coupling beam 12 connected respectively to the end portions 14b and 14c of the drive part 14 may be moved downward, and the beam part 12b may be deformed by flexing in a convex shape. The center area 12c of the beam part 12b and the connector part 12a may then be moved (displaced) upward. As a result, as illustrated in FIG. 6, the direction of deformation by flexing (in a convex shape toward the Z1 side) of the beam part 12b and the direction of deformation by flexing (in a convex shape toward the Z1 side) of the drive part 14 may become the same direction, and a displacement direction (downward, Z2 direction) of the end portions 12f and 12g and a displacement direction (upward, Z1 direction) of the center area 12c may become opposite directions.

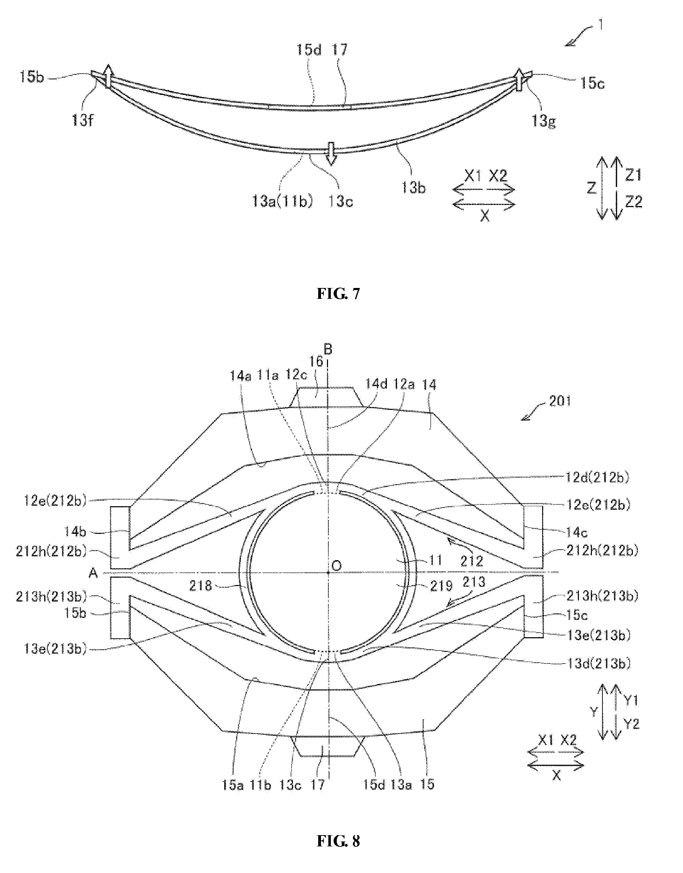

Furthermore, the end portions 13f and 13g of the coupling beam 13 connected respectively to the end portions 15b and 15c of the drive part 15 may be moved upward, and the beam part 13b may be deformed by flexing in a concave shape. The center area 13c of the beam part 13b and the connector part 13a may then be moved (displaced) downward. As a result, as illustrated in FIG. 7, the direction of deformation by flexing (in a concave shape toward the Z2 side) of the beam part 13b and the direction of deformation by flexing (in a concave shape toward the Z2 side) of the drive part 15 may become the same direction, and a displacement direction (upward, Z1 direction) of the end portions 13f and 13g and a displacement direction (downward, Z2 direction) of the center area 13c may become opposite directions.

Here, in the first embodiment, as illustrated in FIG. 5, because a driving force in a torsional direction (torque) is hardly applied from the drive part 14 to the beam part 12b of the coupling beam 12 and torque is hardly applied from the drive part 15 to the beam part 13b of the coupling beam 13, the end portion 11 a on the Y1 side and the end portion 11b on the Y2 side of the mirror part 11 may be hardly deformed by torsion, and as a result, torque that could distort the mirror part 11 is hardly generated.

The end portion 11a of the mirror part 11 may then be displaced upward due to the connector part 12a on the Y1 side being displaced upward, and the end portion 11b of the mirror part 11 may be displaced downward due to the connector part 13a on the Y2 side being displaced downward. As a result, the mirror part 11 may be rotated in an A1 direction around the rotation axis A and tilted to tilt downward (Z2 direction) toward the end portion 11b from the end portion 11 a side positioned on the orthogonal center line B, due to the displacement of the end portions 11a and 11b.

Accordingly, the mirror part 11 may be rotated in the A1 direction around the rotation axis A and tilted, because the end portion 11a of the mirror part 11 connected to the coupling beam 12 is displaced upward due to the piezoelectric element 3b of the drive part 14 on the Y1 side (see fig. 4) deforming by flexing in a convex shape, and because the end portion 11b of the mirror part 11 connected to the coupling beam 13 is displaced downward due to the piezoelectric element 3b of the drive part 15 on the Y2 side deforming by flexing in a concave shape.

Furthermore, the mirror part 11 may be rotated in an A2 direction around the rotation axis A and tilted because a movement opposite to the rotation movement in the A1 direction around the rotation axis A takes place when the drive part 14 on the Y1 side is deformed by flexing in a concave shape and the drive part 15 on the Y2 side is deformed by flexing in a convex shape. Specifically, a direction of deformation by flexing (in a concave shape toward the Z2 side) the beam part 12b and a direction of deformation by flexing (in a concave shape toward the Z2 side) the drive part 14 may become the same direction, and a displacement direction (upward, Z1 direction) of the end portions 12f and 12g and a displacement direction (downward, Z2 direction) of the center area 12c may become opposite directions. Moreover, a direction of deformation by flexing (in a convex shape toward the Z1 side) the beam part 13b and a direction of deformation by flexing (in a convex shape toward the Z1 side) the drive part 15 may become the same direction, and a displacement direction (downward, Z2 direction) of the end portions 13f and 13g and a displacement direction (upward, Z1 direction) of the center area 13c may become opposite directions. The mirror part 11 may then be rotated in the A2 direction around the rotation axis A and tilted because the end portion 11a connected to the coupling beam 12 is displaced downward due to the piezoelectric element 3b of the drive part 14 deforming by flexing in a concave shape and because the end portion 11b connected to the coupling beam 13 is displaced upward due to the piezoelectric element 3b of the drive part 15 deforming by flexing in a convex shape.

Deformation by flexing in a convex shape and deformation by flexing in a concave shape may then be repeatedly alternated in the drive parts 14 and 15 at a drive frequency of about 30 kHz, substantially equal to a natural vibration frequency of the overall laser scanner portion 1. By this, in a resonating state, the mirror part 11 may repeatedly alternate tilting upward or downward toward the end portion 11b from the end portion 11a side positioned on the orthogonal center line B. As a result, the mirror part 11 may be oscillated (continuously tilted) around the rotation axis A at a greater deflection angle than a deflection angle at a normal tilt.

Accordingly, a laser beam may scan in one axis direction at a drive frequency of about 30 kHz in the portable electronic device 100 (see FIG. 1) by reflecting a laser beam from the red laser diode 104, the green laser diode 105, and the blue laser diode 106 (see FIG. 1) in the oscillating mirror part 11. At this time, because distortion is hardly generated in the mirror part 11, the width of the laser beam reflected by the mirror part 11 hardly changes (the laser beam does not converge or expand). By this, a clear projection image is projected by the portable electronic device 100 because a laser beam having a substantially uniform width may be used for scanning by the laser scanner portion 1.

In the first embodiment, as above, the end portion 11a positioned on the orthogonal center line B and the coupling beam 12 may be connected on the Y1 side, and the end portion 11b positioned on the orthogonal center line B and the coupling beam 13 may be connected on the Y2 side. Furthermore, the mirror part 11 may be configured to tilt around the rotation axis A by displacing upward or downward the end portion 11a connected to the coupling beam 12 by flexibly deforming the piezoelectric element 3b of the drive part 14 on the Y1 side, and by displacing upward or downward the end portion 11b connected to the coupling beam 13 by flexibly deforming the piezoelectric element 3b of the drive part 15 on the Y2 side. By this, the mirror part 11 can be tilted around the rotation axis A without generating driving force (torque) around rotation axis A in the coupling beams 12 and 13, unlike when the end portions 11a and 11b and the coupling beams 12 and 13 are respectively connected on the rotation axis A. By this, distortion of the mirror part 11 can be effectively suppressed because the torque applied to the end portions 11a and 11b can be suppressed. As a result, for example, change in the width (convergence or expansion of the laser beam) of the laser beam reflected by the mirror part 11 can be effectively suppressed. Therefore, a clear projection image can be projected by the portable electronic device 100 because the laser beam in which change in width is suppressed can be used for scanning by the laser scanner portion 1.

Furthermore, in the first embodiment, there may be no loss of driving force in a torsion beam because a common torsion beam need not be provided in the laser scanner portion 1. By this, the mirror part 11 can be sufficiently oscillated even when the drive frequency of the drive parts 14 and 15 is increased because the driving force to oscillate the mirror part 11 can be greatly secured. As a result, the natural frequency of the overall laser scanner portion 1 can be selected from a wider range because the range of selection of the drive frequency of the drive parts 14 and 15 can be widened. Therefore, the design freedom of the overall laser scanner portion 1 can be improved because the range of selection of the size and the like of the mirror part 11, the factor that changes the natural frequency of the overall laser scanner portion 1, can be widened.

Furthermore, in the first embodiment, both the connector part 12a of coupling beam 12 and the connector part 13a of the coupling beam 13 may be formed on the orthogonal center line B that is orthogonal to the rotation axis A and are respectively connected to the end portions 11a and 11b of the mirror part 11 on the orthogonal center line B. Moreover, the beam part 12b of the coupling beam 12 may be connected to the drive part 14 on the Y1 side in the end portions 12f and 12g in the X direction, and may also be connected to the connector part 12a in the center area 12c in the X direction. Additionally, the beam part 13b of the coupling beam 13 may be connected to the drive part 15 on the Y2 side in the end portions 13f and 13g in the X direction, and may also be connected to the connector part 13a in the center area 13c in the X direction. By configuring in this manner, displacements near the center area 12c of the coupling beam 12 and the center area 13c of the coupling beam 13 can be increased because the coupling beams 12 and 13 can be deformed by flexing in a convex shape or a concave shape toward the center areas 12c and 13c from both end portions in the X direction (end portions 12f, 12g, 13f, and 13g). By this, the mirror part 11 can be greatly tilted around the rotation axis A because it is possible to increase the size of the displacements of the end portions 11a and 11b connected respectively near the center areas 12c and 13c.

Furthermore, in the first embodiment, displacement in the end portion 11a and displacement in the end portion 11b can be easily controlled because deformation by flexing one of the coupling beams 12 or 13 can be suppressed from affecting deformation by flexing of the other due to the coupling beams 12 and 13 not being connected to each other. By this, the mirror part 11 can be easily tilted to a predetermined angle.

Furthermore, in the first embodiment, the drive parts 14 and 15 may be configured respectively to enable deformation by flexing in a convex shape or a concave shape toward a fixed end from a free end, by defining a fixed end as center areas 14d and 15d in the X direction, and a free end as both end portions (end portions 14b, 14c, 15b, and 15c). By configuring in this manner, flexible deformation of the drive parts 14 and 15 respectively can be transmitted effectively to the coupling beams 12 and 13 because both end portions in the X direction, which are the free ends with the greatest displacements in drive parts 14 and 15, and both end portions (end portions 12f, 12g, 13f, and 13g) of the coupling beams 12 and 13 can be connected respectively.

Furthermore, in the first embodiment, displacements of the end portions 11a and 11b connected respectively near the center areas 12c and 13c can be increased because displacements in the center area 12c in the X direction of the coupling beam 12 deformed to flex in a convex shape or a concave shape, and in the center area 13c in the X direction of the coupling beam 13 deformed by flexing in a convex shape or a concave shape, can be increased by reversing the direction of the displacement direction of the end portions 12f and 12g and the center area 12c, and by reversing the direction of the displacement direction of the end portions 13f and 13g and the center area 13c. By this, the mirror part 11 can be tilted greatly around the rotation axis A.

Furthermore, in the first embodiment, displacements in the end portion 11a and displacements in the end portion 11b can be controlled more easily because deformation by flexing one of the coupling beams 12 or 13 can be suppressed from affecting deformation by flexing of the other due to the coupling beams 12 and 13 independently deforming by flexing. By this, the mirror part 11 can be easily tilted to a predetermined angle.

Furthermore, in the first embodiment, the drive part 14 and the coupling beam 12 can be suppressed from attracting each other, and the drive part 15 and the coupling beam 13 can be suppressed from attracting each other, unlike when the directions of flexible deformation are in opposite directions, by making the direction of flexible deformation of the beam part 12b and the direction of flexible deformation of the drive part 14 the same direction, and by making the direction of flexible deformation of the beam part 13b and the direction of flexible deformation of the drive part 15 the same direction. By this, the mirror part 11 can be tilted greatly around the rotation axis A.

Furthermore, in the first embodiment, the mirror part 11 can be tilted reliably along the orthogonal center line B because the end portions 11a and 11b positioned on the orthogonal center line B can be displaced by connecting the coupling beams 12 and 13 to the end portions 11a and 11b, respectively, positioned on the orthogonal center line B that is orthogonal to the rotation axis A of the mirror part 11. By this, the mirror part 11 can be tilted reliably around the rotation axis A.

Furthermore, in the first embodiment, the mirror part 11 can be tilted easily around the rotation axis A because the end portions 11a and 11b of the mirror part 11 can be displaced from both sides of the Y direction of the mirror part 11 by forming the coupling beams 12 and 13 to sandwich the mirror part 11 from the Y direction (a direction in which the orthogonal center line B extends).

Furthermore, in the first embodiment, the laser scanner portion 1 can be suppressed from increasing in size because the drive parts 14 and 15 can be formed near the mirror part 11 side by forming the drive parts 14 and 15 to bend so that the mirror part 11 side sinks in a plan view. Moreover, the area of the drive parts 14 and 15 can be further enlarged because the lengths of the drive parts 14 and 15 can be further increased compared to when the drive parts 14 and 15 are formed in a straight line, by bending the drive parts 14 and 15. By this, the driving force generated in the drive parts 14 and 15 can be easily increased.

### (Second Embodiment)

Next, a second embodiment of the present invention will be described with reference to FIG. 8. In this second embodiment, a description will be given of when reinforcing frame parts 218 and 219 that connect a coupling beam 212 and a coupling beam 213 are provided additionally to the laser scanner 1 of the first embodiment. The coupling beams 212 and 213 are respectively one example of a "first deformable coupling beam" and a "second deformable coupling beam" according to one or more embodiments of the present invention, and the reinforcing frame parts 218 and 219 are respectively one example of a "reinforcing part" according to one or more embodiments of the present invention.

As illustrated in FIG. 8, in a laser scanner portion 201 according to the second embodiment of the present invention, a beam part 212b of the coupling beam 212 may have a curved beam section 12d, a pair of straight beam sections 12e, and a pair of connector beam parts 212h that extend in a straight line along a Y direction. Moreover, a beam part 213b of the coupling beam 213 may have a curved beam section 13d, a pair of straight beam sections 13e, and a pair of connector beams 213h that extend in a straight line along the Y direction. The laser scanner portion 201 is one example of a "vibrating mirror element" according to one or more embodiments of the present invention.

The pair of connector beam parts 212h may be connected respectively to end portions 14b and 14c of a drive part 14 to sandwich the drive part 14, and may be formed to connect respectively to the pair of straight beam sections 12e and the end portions 14b and 14c of the drive part 14. Moreover, the pair of connector beam parts 213h may be connected respectively to end portions 15b and 15c of a drive part 15 to sandwich the drive part 15, and may be formed to connect respectively to the pair of straight beam sections 13e and the end portions 15b and 15c of the drive part 15.

Here, in the second embodiment, the reinforcing frame parts 218 and 219 that connect the coupling beam 212 and the coupling beam 213 may be formed respectively on an X1 side and X2 side of a mirror part 11. These reinforcing frame parts 218 and 219 may be formed in an arc along an outer edge of the mirror part 11, and may be formed integrally with the mirror part 11 and the coupling beams 212 and 213.

Furthermore, the reinforcing frame part 218 may be connected to a section near an end portion 11a on a Y1 side of the mirror part 11 as well as near an X1 side of the curved beam section 12d of the coupling beam 212, and may be connected to a section near an end portion 11b on a Y2 side of the mirror part 11 as well as near the X1 side of the curved beam section 13d of the coupling beam 213. Moreover, the reinforcing frame part 219 may be connected to a section near the end portion 11a as well as near an X2 side of the curved beam section 12d, and may be connected to a section near the end portion 11b as well as near the X2 side of the curved beam section 13d. As a result, the reinforcing frames 218 and 219 may both connect the coupling beam 212 near the end portion 11a and the coupling beam 213 near the end portion 11b. Other structures of the second embodiment of the present invention and the oscillating motion of the mirror part may be the same as the first embodiment described above.

In the second embodiment, as above, distortion of the mirror part 11 can be effectively suppressed because torque applied to the end portions 11a and 11b can be suppressed by connecting on the Y1 side the end portion 11a positioned on an orthogonal center line B and the coupling beam 212, and by connecting on the Y2 side the end portion 11b positioned on the orthogonal center line B and the coupling beam 213.

Furthermore, in the second embodiment, the end portions 11a and 11b can be suppressed from being displaced in an unintended direction because excessive deformation by flexing the coupling beam 212 near the end portion 11a and the coupling beam 213 near the end portion 11b can be suppressed by the reinforcing frame parts 218 and 219 by providing the reinforcing frame parts 218 and 219 that connect the coupling beam 212 near the end portion 11a and the coupling beam 213 near the end portion 11b. By this, the mirror part 11 can be tilted reliably around the rotation axis A. Other effects of the second embodiment of the present invention may be the same as the first embodiment described above.

The embodiments herein disclosed are examples on all points and should be considered as not restrictive. The scope of the present invention is indicated by the scope of the claims and not by the descriptions of the embodiments described above and furthermore includes all equivalent meanings of the scope of the claims and all modifications within the scope of the claims.

For example, in the first embodiment described above, although an example was given in which deformation by flexing in a convex shape and deformation by flexing in a concave shape is repeated alternately in the drive parts 14 and 15 at a drive frequency of about 30 kHz, substantially equal to the natural vibration frequency of the overall laser scanner portion 1, the present invention is not limited to this. In the present invention, the drive frequency of the first drive part and the second drive part may differ from the about 30 kHz drive frequency. In this case, the drive frequency and the natural vibration frequency of the overall vibrating mirror element must be matched to resonate the mirror part.

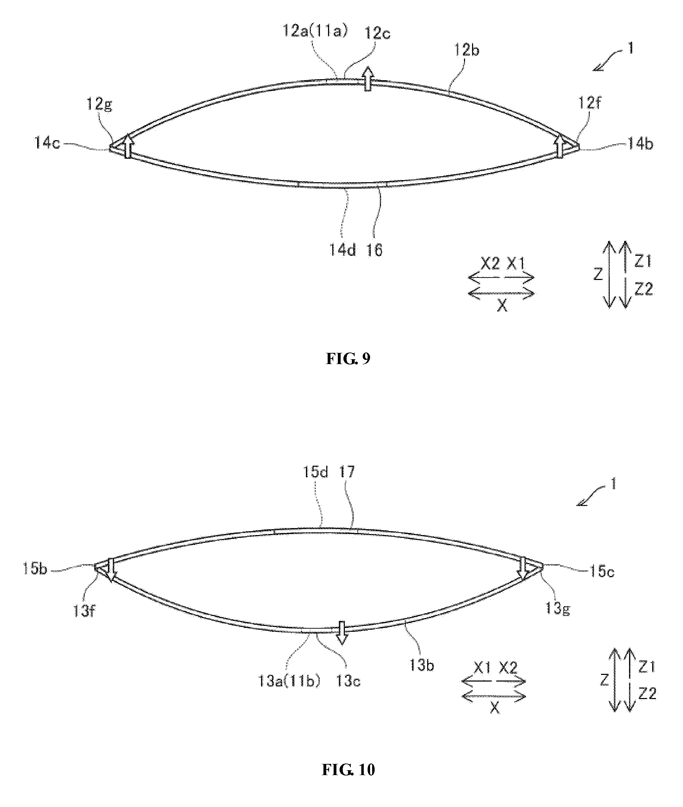

Specifically, as in the first modified example of the first embodiment illustrated in FIGS. 9 and 10, the natural vibration frequency of the overall laser scanner portion 1 can be decreased by making the direction of the flexible deformation (a convex shape in FIG. 9) of the beam part 12b of the coupling beam 12 (first deformable coupling beam) and the direction of the flexible deformation (a concave shape in FIG. 9) of the drive part 14 (first drive part) opposite directions, as illustrated in FIG. 9, and by making the direction of the flexible deformation (a concave shape in FIG. 10) of the beam part 13b of the coupling beam 13 (second deformable coupling beam) and the direction of flexible deformation (a convex shape in FIG. 10) of the drive part 15 (second drive part) opposite directions, as illustrated in FIG. 10, and as a result, the mirror part 11 (see FIG. 2) can be made to resonate. When driving as illustrated in FIGS. 9 and 10 (when the directions of flexible deformation are in opposite directions), the deflection angle of the mirror part 11 may decrease compared to when driving as illustrated in the first embodiment because the drive part 14 and the coupling beam 12 attract each other and the drive part 15 and the coupling beam 13 attract each other.

Furthermore, the natural vibration frequency of the overall laser scanner portion 1 can be decreased even by making the mirror part 11 and the like larger. Meanwhile, when increasing the drive frequency of the drive parts 14 and 15, the natural vibration frequency of the overall laser scanner portion 1 can be increased by making the mirror part 11 and the like smaller, and as a result, the mirror part 11 can be made to resonate.

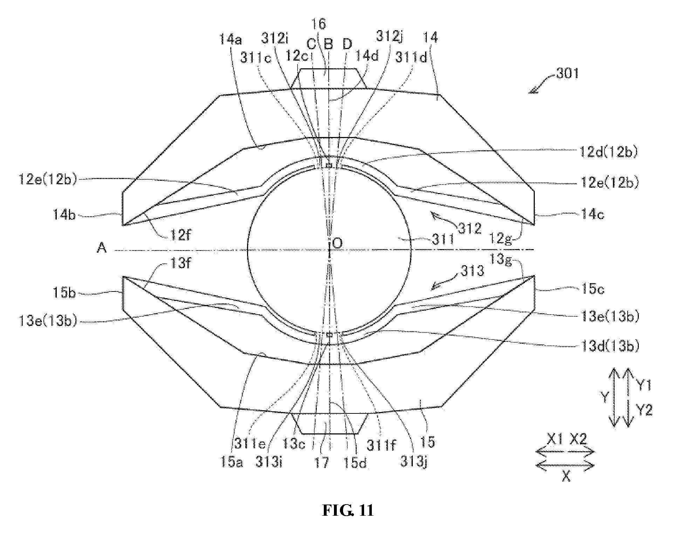

Furthermore, in the above first embodiment, an example was given in which the mirror part 11 and the coupling beams 12 and 13 were connected on the orthogonal center line B, but the present invention is not limited to this. For example, as seen in a laser scanner portion 301 in the second modified example of the first embodiment illustrated in FIG. 11, an end portion 311c on an orthogonal line C of a mirror part 311 and a connector part 312i of a coupling beam 312 may be connected, and an end portion 311d on an orthogonal line D of the mirror part 311 and a connector part 312j of the coupling beam 312 may be connected. Furthermore, an end portion 311e on the orthogonal line D of the mirror part 311 and a connector part 313i of a coupling beam 313 may be connected, and an end portion 311f of the orthogonal line C of the mirror part 311 and a connector part 313j of the coupling beam 313 may be connected. The laser scanner portion 301 is one example of a "vibrating mirror element" according to one or more embodiments of the present invention. Moreover, the end portions 311c and 311d are one example of a "first mirror end portion" of the present invention, and the end portions 311e and 311f are one example of a "second mirror end portion" according to one or more embodiments of the present invention.

Here, the orthogonal lines C and D may extend in directions to intersect with the rotation axis A and the orthogonal center line B, and extend so as to pass through the center O of the mirror part 311. Furthermore, the end portions 311c, 311d, 311e, and 311f may be positioned near the orthogonal center line B. Moreover, the connector part 312c and the connector part 312d may be formed so as to have substantial mirror image symmetry relative to the orthogonal center line B, and the connector part 313c and the connector part 313d may be formed so as to have substantial mirror image symmetry relative to the orthogonal center line B. By this, the mirror part 311 can be stably tilted. Additionally, the first mirror end portion and the second mirror end portion may be provided in a position separated from the orthogonal center line as well as in a position other than on the rotating axis instead of near the orthogonal center line.

Furthermore, in the above first embodiment, an example was given in which the laser beam is scanned in one axis direction, but the present invention is not limited to this. In the present invention, the laser beam may be configured so as to scan in two axis directions by providing an outer drive part on the outer side of the laser scanner portion to tilt the laser scanner portion around an orthogonal axis that is orthogonal to the rotation axis.

Furthermore, in the above first and second embodiments, examples were given in which the drive part 14 (the first drive part) and the drive part 15 (the second drive part) were formed to bend so that the mirror part 11 side sinks in a plan view, but the present invention is not limited to this. In the present invention, the first drive part and the second drive part may be formed to curve in an arc so that the mirror part side sinks. Moreover, the first drive part and the second drive part may be formed to extend in a straight line or may be formed to bend or curve so that an opposite side to the mirror part sinks.

Furthermore, in the above first and second embodiments, an example was given in which the mirror part 11 has a circular shape in a plan view, but the present invention is not limited to this. In the present invention, the mirror part may have an elliptical shape or a quadrilateral shape. Furthermore, those of ordinary skill in the art would appreciate that certain "parts" or "portions" of one or more embodiments of the present invention may be implemented by a circuit, processor, etc. using known methods.

### [Explanation of Reference Numerals]

1, 201, 301 Laser scanner part (vibrating mirror element)
3b Piezoelectric element
11, 311 Mirror part
11a, 311c, 311d End portion (first mirror end portion)
11b, 311e, 311f End portion (second mirror end portion)
12, 212 Coupling beam (first deformable coupling beam)
13,213 Coupling beam (second deformable coupling beam)
14 Drive part (first drive part)
15 Drive part (second drive part)
100 Portable electronic device (electronic device having a projector function)
102 Control part
104 Red laser diode (laser beam generator)
105 Green laser diode (laser beam generator)
106 Blue laser diode (laser beam generator)
218, 219 Reinforcing frame part (reinforcing part)
A Rotation axis
B Orthogonal center line (intersection line)
C, D Intersection line

## Claims

1. A vibrating mirror element (1; 201; 301), comprising:
a mirror part (11; 311) that reflects light and is tiltable around a rotation axis (A);
a first deformable coupling beam (12; 212) and a second deformable coupling beam (13; 213) connected respectively to a first mirror end portion (11a; 311c, 311d) and a second mirror end portion (11b; 311e, 311f) of the mirror part (11; 311) positioned on an intersection line (B; C, D) that intersects the rotation axis (A); and
a first drive part (14) and a second drive part (15) that each include a piezoelectric element (3b) configured to deform by voltage application, the first drive part (14) and the second drive part (15) being connected respectively to the first deformable coupling beam (12; 212) and the second deformable coupling beam (13; 213); wherein
the mirror part (11; 311) is configured to be tilted around the rotation axis (A) by:
displacement of the first mirror end portion (11a; 311c, 311d) connected to the first deformable coupling beam (12; 212) caused by deformation of the piezoelectric element (3b) of the first drive part (14), and
displacement of the second mirror end portion (11b; 311e, 311f) connected to the second deformable coupling beam (13; 213) caused by deformation of the piezoelectric element (3b) of the second drive part (15).

2. The vibrating mirror element (1; 201; 301) according to claim 1, wherein
the first deformable coupling beam (12; 212), at both end portions (12f, 12g) thereof in a longitudinal direction, is connected near both end portions (14b, 14c) of the first drive part (14) in a longitudinal direction,
the first deformable coupling beam (12; 212), near a center area thereof (12c) in a longitudinal direction, is connected to the first mirror end portion (11a; 311c, 311d) of the mirror part (11; 311),
the second deformable coupling beam (13; 213) is not connected to the first deformable coupling beam (12; 212),
the second deformable coupling beam (13; 213), at both end portions (13f, 13g) thereof in a longitudinal direction, is connected near both end portions (15b, 15c) of the second drive part (15) in a longitudinal direction, and
the second deformable coupling beam (13; 213), near a center area (13c) thereof in a longitudinal direction, is connected to the second mirror end portion (11b; 311e, 311f) of the mirror part (11; 311).

3. The vibrating mirror element (1; 201; 301) according to claim 2, wherein:
the first drive part (14) and the second drive part (15) are configured so that the respective end portions thereof (14b, 14c, 15b, 15c) in the longitudinal direction are free ends and a substantially center area thereof (14d, 15d) in the longitudinal direction is a fixed end, and
the first drive part (14) and the second drive part (15) are configured to deform from the respective fixed end.

4. The vibrating mirror element (1; 201; 301) according to claim 2 or claim 3, wherein
the first deformable coupling beam (12; 212) is configured to deform so that a displacement direction at both end portions (12f, 12g) thereof in the longitudinal direction and a displacement direction at the substantially center area (12c) thereof in the longitudinal direction are opposite directions, and
the second deformable coupling beam (13; 213) is configured to deform independently of the first deformable coupling beam (12; 212) so that a displacement direction at both end portions (13f, 13g) thereof in the longitudinal direction and a displacement direction at the substantially center area (13c) thereof in the longitudinal direction are opposite directions.

5. The vibrating mirror element (1; 201; 301) according to any of claims 1-4, wherein a direction of deformation of the first drive part (14) and a direction of deformation of the first deformable coupling beam (12; 212) are the same direction, and a direction of deformation of the second drive part (15) and a direction of deformation of the second deformable coupling beam (13; 213) are the same direction.

6. The vibrating mirror element (1; 201; 301) according to any of claims 1-5, wherein the first deformable coupling beam (12; 212) and the second deformable coupling beam (13; 213) are connected respectively to the first mirror end portion (11a; 311 c, 311 d) and the second mirror end portion (11b; 311e, 311f) positioned near an orthogonal center line (B) orthogonal to the rotation axis (A) of the mirror part (11; 311).

7. The vibrating mirror element (1; 201; 301) according to claim 6, wherein the first deformable coupling beam (12; 212) and the second deformable coupling beam (13; 213) are formed to sandwich the mirror part (11; 311) from a direction in which the orthogonal center line (B) extends.

8. The vibrating mirror element (1; 201; 301) according to any of claims 1-7, wherein the first drive part (14) and the second drive part (15) curve or bend so that the mirror part (11; 311) sinks in a plan view.

9. The vibrating mirror element (1; 201; 301) according to any of claims 1-8, further comprising a reinforcing part (218, 219) formed to connect the first deformable coupling beam (12; 212) near the first mirror end portion (11a; 311c, 311d) and the second deformable coupling beam (13; 213) near the second mirror end portion (11b; 311e, 311f).

10. The vibrating mirror element (1; 201; 301) according to any of claims 1-9, wherein:
the mirror part (11; 311) comprises a mirror;
the first deformable coupling beam (12; 212) and the second deformable coupling beam (13; 213) are connected respectively to a first mirror end (11a; 311c, 311d) and a second mirror end (11b; 311e, 311f) of the mirror; and
the first drive part (14) comprises a first drive circuit and the second drive part (15) comprises a second drive circuit that each include a piezoelectric crystal (3b) configured to deform by voltage application.

11. An electronic device (100) having a projector function, comprising:
a laser beam generator (104, 105, 106);
a control part (102) configured to recognize pixel information by analyzing input video signals; and
a vibrating mirror element (1; 201; 301) according to any of claims 1-10 configured to scan the laser beam.

12. The electronic device (100) according to claim 11, wherein:
the laser beam generator (104, 105, 106) comprises a laser;
the control part (102) comprises a control circuit.
